# EUROPEAN PATENT APPLICATION

(11) **EP 1 777 142 A2**
(43) Date of publication of application: **25.04.2007**
(21) Application number: 06255119.7
(22) Date of filing: 04.10.2006
(51) Int. Cl.: B62D 5/06, F16L 19/028, F16L 19/02

(54) **Flare tube assembly of hydraulic power steering apparatus**

(30) Priority: 18.10.2005 KR 20050098358
(71) Applicant: Mando Corporation, Pyeongtaek-si, Gyeonggi-do (KR)
(72) Inventor: Heo, Sung Moo, Wonju-si Gandwon-do (KR)
(74) Representative: Neobard, William John

(57) **Abstract**

Disclosed is a flare tube assembly for a pressure pipe of an hydraulic cylinder e.g. in a power steering comprising: a plug (310) formed with an insertion hole (312) through which the pressure pipe (305) is inserted into the plug, and having an annular groove (314) formed on an outer peripheral surface of a lower portion of the plug; a fitting part (330) having a coupling groove (332) formed on an inner peripheral surface of an upper portion thereof, through which the plug is inserted into the fitting part, a through-hole (334) through which the pressure pipe is inserted into the fitting part (330), and a step portion (336) formed on an inner surface of the fitting part, on which the pressure pipe is seated; and coupling means (320) installed in the groove (314) formed on the plug, for preventing the plug from being separated from the fitting part.

## Description

The present invention relates to a flare tube assembly for a hydraulic power steering apparatus.

Embodiments of the present invention relate to a flare tube assembly of a hydraulic power steering apparatus, which can improve assembly by simplifying the structure so as to allow easy assembling of a plug with a fitting part by interposing a coupling means between the plug and the fitting part, preventing leakage of operational fluid.

Generally, steering apparatus refers to an apparatus which is operated when a driver voluntarily changes a proceeding direction of a vehicle. In the steering apparatus, the driver can rotate a steering wheel so that rotation of the steering wheel is transmitted to a steering gear, thereby adjusting the angle of the wheels of the vehicle so as to control the proceeding direction of the vehicle.

Research in steering apparatus aims to provide the driver with convenience, to allow the driver to stably and smoothly steer the vehicle. According to the tendency of such a research, hydraulic or electric power steering apparatuses have been developed in order to improve steering capability for the driver. In hydraulic power steering apparatus, a hydraulic pump is operated by the vehicle engine to generate hydraulic pressure. The hydraulic pressure is timely transmitted to a driving piston in dependence on rotation of a steering shaft or a steering wheel. In electric power steering, an electric control unit detects steering torque and vehicle speed based on operation of the steering wheel, and then operates an electric motor according to the driving condition of the vehicle so as to assist the rotation of the steering shaft when the steering wheel is turned.

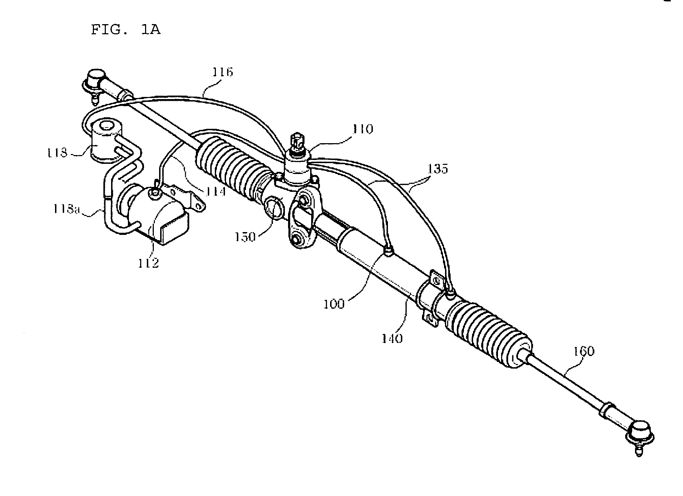

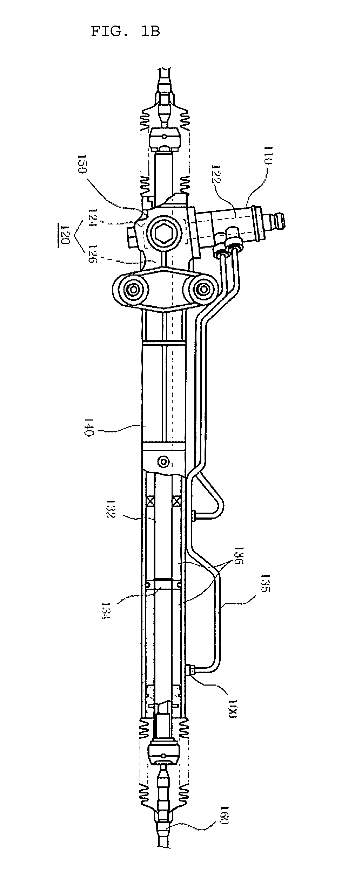

FIG. 1A is a schematic perspective view showing a conventional hydraulic power steering apparatus, and FIG. 1B is a sectional view showing the conventional hydraulic power steering apparatus. As shown in FIGS. 1A and 1B, the hydraulic power steering apparatus includes a hydraulic pressure control valve 110 disposed on the lower end of a steering shaft (not shown) to which a steering wheel (not shown) is installed, for controlling a flow direction of operational fluid when the steering wheel is operated, a gearbox 150 provided with a rack-pinion gear 120 and connected to an operational cylinder 140, and the operational cylinder 140 in which a rack bar 132 is moved along its axis by hydraulic pressure supplied through a hydraulic pressure control valve 110 thereto, so as to apply operational force to tie rods 160, steering the wheels of the vehicle.

The operational fluid is supplied through a pressure hose 114 from a hydraulic pump 112 to the hydraulic pressure control valve 110. The hydraulic control valve 110 selectively supplies the operational fluid through hydraulic pressure pipes 135 to the pressure chambers 136 defined at left and right sides of a piston 134 in the operational cylinder 140 according to the rotation direction of the steering shaft (not shown) when the wheels of the vehicle are steered, so as to assist the operational force of the steering wheel. Meanwhile, the operational fluid, which has completed its role, is returned through a recovery pipe 116 from the hydraulic pressure control valve 110 to a fluid reservoir 118. Further, the operational fluid is supplied again to the hydraulic pump 112 through an inlet hose 118a.

The gearbox 150 includes the rack-pinion gear 120 in which a pinion gear 124 mounted on a pinion shaft 122 is engaged with a rack gear 126 formed on a peripheral surface of the rack bar 132, the rack bars 132 extending through the operational cylinder 140 and connected to the tie rods 160, respectively, and the operational cylinder 130 having the rack bar 132 in which the piston 134 reciprocally moves in the pressure chamber 136 by the operational fluid supplied through the pressure pipe 135 therein.

Here, a flare tube assembly 100 is provided between the operational cylinder 140 and the pressure pipe 135 and connected to the pressure pipe 135 in order to selectively supply the operational fluid to the left and right chambers 136 and to prevent leakage of the operational fluid.

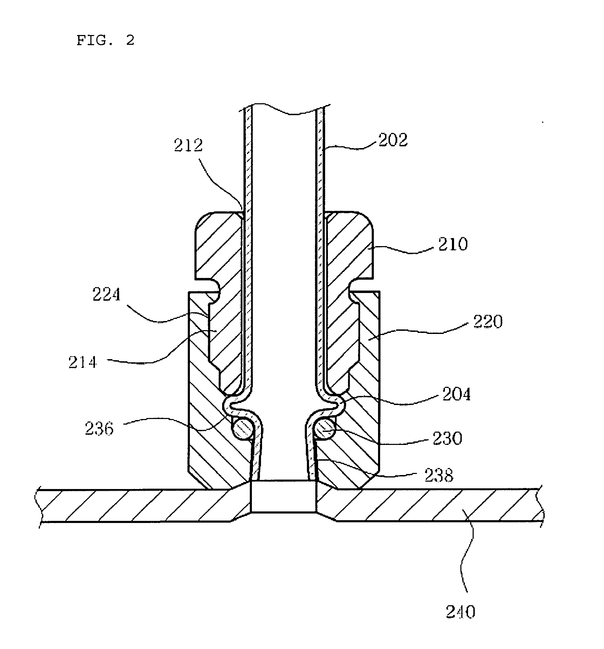

Referring to FIG. 2, a conventional flare tube assembly 200 includes a flare nut 210 having an insert hole 212 formed therein, through which a pressure pipe 202 is inserted into the flare nut 210, and a fitting part 220 coupled to the flare nut 210 by bolt/nut and having an O-ring 230 mounted on a lower end thereof.

The flare nut 210 has the insert hole 212 formed therein, through which the pressure pipe 202 is inserted into the flare nut 210, and has a male screw thread 214 formed at a lower end thereof.

The fitting part 220 has a female screw thread 224 formed at an inner surface thereof, so that the flare nut 210 can be coupled to the fitting part 220 in a bolt/nut locking manner. Furthermore, the fitting part 220 has the O-ring 230 installed inside thereof as a sealing member. A step portion 236 is formed between the O-ring 230 and the lower portion of the female screw thread 224 so that the pressure pipe 202 is stably secured. The fitting part 220 has a tapered through-hole 238 formed therein in order to stably secure the pressure pipe 202 inserted into the fitting part 220. Here, the O-ring 230 installed at the lower portion of the fitting part 220 is disposed over the upper portion of the through-hole 238 so as to prevent leakage of the operational fluid and to stably secure the pressure pipe 202 along with the step portion 236.

In the flare tube assembly 200 constructed as described above, the pressure pipe 202 with the flare nut 210 is inserted into the fitting part 220, and then the flare nut 210 is locked into the fitting part. While the pressure pipe 202 extends through the through-hole 238 of the fitting part 220, the leading end of the pressure pipe 202 becomes wrinkled by the effect of the O-ring 230, so as to form the wrinkled portion 204. The wrinkled portion 204 is seated on the step portion 236 and at the same time secured by the flare nut 210. Hence, the pressure pipe 202 also is secured.

In such a flare tube assembly 200, a worker temporarily locks the flare nut 210 into the fitting part 220 when the pressure pipe 202 is connected to the operational cylinder 240. Next, the flare nut 210 is tightly locked into the fitting part 220, for example by using an air tool, a torque wrench, etc.

However, if a worker temporarily locks the flare nut 210 into the fitting part 220 with excessive force, or is unskilled in using tools, the pressure pipe 202 can be damaged, thereby causing leakage of the operational fluid.

Furthermore, it is difficult to assemble the elements of the flare tube assembly. In addition, when the elements of the flare tube assembly are not accurately assembled, the complete coupling of the flare nut 210 with the fitting part 220 cannot be accomplished.

It is an object of the invention to at least partly avoid problems of the prior art.

In order to accomplish this object, there is provided a flare tube assembly including an operational cylinder in which a piston is disposed and which is operated by operational fluid supplied to the cylinder through a pressure control valve, and a pressure pipe connected to an upper portion of the operational cylinder and selectively supplying the operational fluid to a pressure chamber of the operational cylinder, and being provided to a connection portion of the operational cylinder and the pressure pipe, the flare tube assembly comprising: a plug formed with an insertion hole through which the pressure pipe is inserted into the plug, and having an annular groove formed on an outer peripheral surface of a lower portion of the plug; a fitting part having a coupling groove formed on an inner peripheral surface of an upper portion thereof, through which the plug is inserted into the fitting part, a through-hole through which the pressure pipe is inserted into the fitting part, and a step portion formed on an inner surface of the fitting part, on which the pressure pipe is seated; and coupling means installed in the groove formed on the plug, for preventing the plug from being separated from the fitting part.

The above and other objects, features and advantages of the present invention will be more apparent from the following detailed description taken in conjunction with the accompanying drawings, in which:
FIG. 1A is a schematic perspective view showing a conventional hydraulic power steering apparatus;
FIG. 1B is a sectional view showing the conventional hydraulic power steering apparatus;
FIG. 2 is a sectional view showing a flare tube assembly of the conventional hydraulic power steering apparatus;
FIG. 3A is an exploded perspective view showing a flare tube assembly of a hydraulic power steering apparatus embodying the present invention; and
FIG. 3B is a sectional view showing the flare tube assembly of the hydraulic power steering apparatus embodying the present invention.

In the various figures, like reference signs refer to like parts.

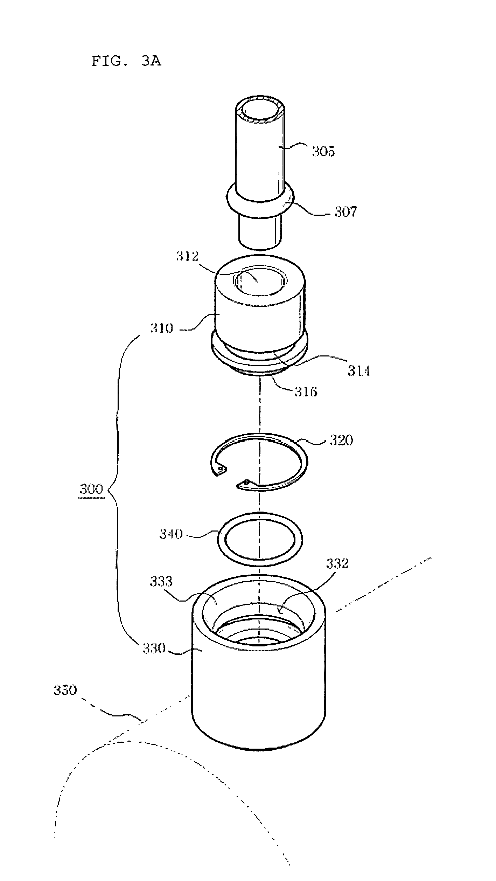

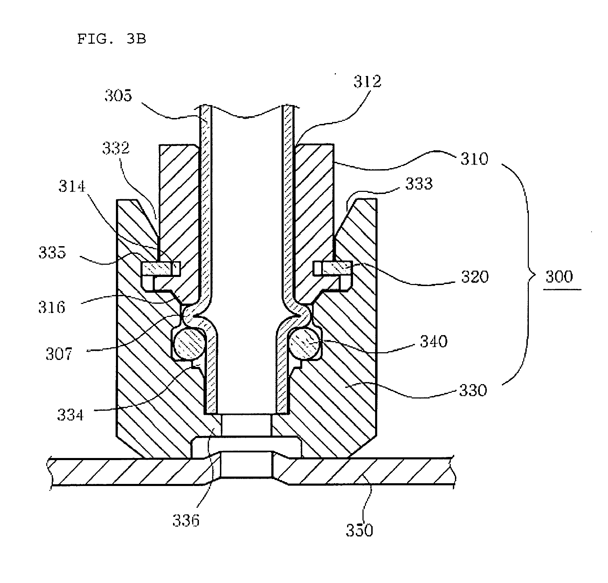

Referring to FIGs. 3A and 3B, an embodiment of a flare tube assembly 300 includes a plug 310 formed with an insertion hole 312 in which a pressure pipe 305 is inserted, a coupling member 320 mounted on an outer peripheral surface of the lower portion of the plug 210, and a fitting part 330 into which the lower portion of the plug 310 is inserted and coupled.

The plug 310 has the insertion hole 312 formed therein, through which the pressure pipe 305 is inserted into the plug 310. Such an insertion hole 312 is formed to extend through the plug 310 from an upper portion to the lower portion of the plug 310.

Further, the plug 310 has an annular groove formed in the outer peripheral surface thereof, in which the coupling member 320 is mounted. In one embodiment, such a groove is formed at the lower portion of the plug 310 so that the plug 310 is stably and securely coupled to the fitting part 330, when the plug 310 is coupled to the fitting part 330. Further, the groove 314 in one embodiment has a sectional area larger than that of the coupling member 320 in order to allow the movement of the coupling member 320 into the groove 314.

The coupling member 320 has a desired elasticity to help in coupling of the plug 310 to the fitting part 330. Any coupling member can be used for the plug 310 if it possesses a desired strength in order to prevent the plug 310 from being separated from the fitting part 330. In some embodiments, a snap ring and a stopper ring, etc. can be used.

An annular protrusion 316 is formed at the terminal end of the plug 310 to stably secure a wrinkle portion 307 formed in the pressure pipe 305. Such a protrusion 316 is tapered to the inside of the plug 310. That is, the protrusion 316 is a portion to make friction directly with the wrinkle portion 307 of the pressure pipe 305. Therefore, when the coupling of the plug 310 to the fitting part 330 is completed, the protrusion 316 can prevent the leakage of the operational fluid due to the damage of the pressure pipe 305 in advance.

The fitting parts 330 are provided on the outer peripheral surface of the operational cylinder 350, and disposed at both sides of a pressure chamber on the basis of the piston (not shown) of the cylinder 350.

Each fitting part 330 has a coupling groove 332 formed on the inner surface of the upper portion thereof so as to receive the plug 310 inserted into and coupled to the fitting part 330. Such a coupling groove 332 is tapered from the upper portion to the lower portion of the fitting part 330 so as to smoothly urge the coupling member 320 mounted on the plug 310 to the inside of the groove 314.

In addition, a latching jaw 335 is formed below the coupling groove 332. Such a latching jaw 335 latches the coupling member 320 mounted in the groove 314 when the plug 310 is coupled to the fitting part 330, thereby stably securing and preventing the plug 310 from being separated from the fitting part 330.

A through-hole 334 is formed at a center portion of the fitting part 330 so that the operational fluid is smoothly supplied to the operational cylinder 350 through the pressure pipe 305. Further, an O-ring 340 is interposed between the coupling groove 332 of the fitting part 330 and the through-hole 334. Such an O-ring 340 plays the role of supporting the lower section of the wrinkle portion 307 of the pressure pipe 305 which is inserted into the plug 310, and simultaneously preventing the leakage of the operational fluid when the plug 310 is coupled to the fitting part 330.

A step portion 336 is formed at the lower portion of the fitting part 330 so as to receive the terminal end of the pressure pipe 305. The step portion 336 plays the role of stably securing the pressure pipe 305. In one embodiment, the step portion 336 is integrally and annularly formed on the inner surface of the fitting part 330 in order to entirely secure the pressure pipe 305. However, this is not limited to the step portion.

The flare tube assembly 300 constructed as described above, is assembled by inserting the pressure pipe 305 into the plug 310 with the coupling member 320 and then coupling the plug 310 to the fitting part 330. At this time, the coupling member 320 provided to the coupling member 320 moves to the inside of the groove 314. When the coupling of the plug 310 to the fitting part 330 is completed, the coupling member 320 moves outward from the inside of the groove 314. Hence, a part of the coupling member 320 is latched by the latching jaw 335 of the fitting part 330. As a result, it is possible to stably secure the plug 310 to the fitting part 330 after the coupling of the plug 310 to the fitting part 330.

Further, the pressure pipe 305, which is inserted along the through-hole 334 into the fitting part 330, is seated on the annular step portion 336 formed on the inner surface of the through-hole 334 and stably secured to the fitting part 330, so that the operational fluid can be supplied to the pressure chamber of the operational cylinder 350.

The invention is not restricted to the described features of the embodiments.

## Claims

1. A flare tube assembly including an operational cylinder in which a piston is disposed and which is operated by operational fluid supplied to the cylinder through a pressure control valve, and a pressure pipe connected to an upper portion of the operational cylinder and selectively supplying the operational fluid to a pressure chamber of the operational cylinder, and being provided to a connection portion of the operational cylinder and the pressure pipe, the flare tube assembly comprising:
a plug formed with an insertion hole through which the pressure pipe is inserted into the plug, and having an annular groove formed on an outer peripheral surface of a lower portion of the plug;
a fitting part having a coupling groove formed on an inner peripheral surface of an upper portion thereof, through which the plug is inserted into the fitting part, a through-hole through which the pressure pipe is inserted into the fitting part, and a step portion formed on an inner surface of the fitting part, on which the pressure pipe is seated; and
coupling means installed in the groove formed on the plug, for preventing the plug from being separated from the fitting part.

2. A flare tube assembly according to claim 1, wherein the plug has an annular protrusion formed at a terminal end of the plug to stably secure the pressure pipe.

3. A flare tube assembly according to claim 1, wherein the coupling means includes a snap ring and a stopping ring.

4. A flare tube assembly according to claim 1, wherein a latching jaw is formed below the coupling groove of the fitting part, so as to secure the coupling means.

5. A flare tube assembly according to claim 1, wherein an O-ring is interposed between the coupling groove and the through-hole of the fitting part.
